# EUROPEAN PATENT APPLICATION

(11) **EP 3 480 093 A1**
(43) Date of publication of application: **08.05.2019**
(21) Application number: 18202777.1
(22) Date of filing: 26.10.2018
(51) Int. Cl.: B62K 19/30, B62M 6/90, E05D 3/12

(54) **TWO-WHEELED VEHICLE FRAME**

(30) Priority: 02.11.2017 TW 10637991; 16.08.2018 TW 10728574
(71) Applicant: Darfon Electronics Corp., 33341 Taoyuan City (TW)
(72) Inventor: Kou, Lun-Chien, 33341 Taoyuan City (TW); Chen, Wei-Liang, 33341 Taoyuan City (TW)
(74) Representative: Becker Kurig Straus

(57) **Abstract**

A two-wheeled vehicle frame (16) includes a battery container (18) having a containing space (19), a battery socket (20) fixed in the containing space (19) and electrically connected to a power source of an electric bicycle, a cover (24), and a first bending rod (26). A battery of an electric bicycle is detachably inserted into the battery socket (20) and contained in the containing space (19). The first bending rod (26) is pivoted to the cover (24) and the battery socket (20) or the battery container (18). When the first bending rod (26) pivots to enter the containing space (19), the cover (24) pivots to cover an opening of the containing space (19). When the first bending rod (26, 102, 202) pivots to leave the containing space (19), the cover (24) pivots to expose the opening.

## Description

### Field of the Invention

The present invention relates to a two-wheeled vehicle frame utilizing a linkage mechanism to make a cover pivotable together with the linkage mechanism according to the pre-characterizing clause of claim 1.

### Background of the Invention

In general, an electronic bicycle includes a motor. The motor is used for rotating wheels of the electronic bicycle to drive the electronic bicycle to move forward. For providing electrical power to the motor, a main frame of the electronic bicycle usually has a battery additionally disposed thereon. For example, the battery could be disposed on a seat tube supporting a bicycle saddle or be disposed on an upper or lower tube connected to a handle bar, so as to provide electrical power to the motor. A conventional battery containing design involves inserting the battery in a battery container on the main frame and then utilizing a cover to cover the battery container (e.g. by a structural engagement method or a screw locking method) to complete installation of the battery. However, the aforesaid design usually causes the problem that the cover is not easy to open and the user action to take the battery out of the electronic bicycle is easily interfered by the cover when the cover is open. Thus, how to ensure that a user can open the cover quickly and conveniently for the subsequent battery replacement operation is an important issue in design of the electronic bicycle.

### Summary of the Invention

This in mind, the present invention aims at providing a two-wheeled vehicle frame utilizing a linkage mechanism to make a cover pivotable together with the linkage mechanism. In such a manner, a user can open or close the cover quickly and conveniently to efficiently solve the prior art problem that the cover is not easy to open or the user action to take a battery out of the electronic bicycle, so that operational convenience of the electronic bicycle in installation and replacement of the battery can be greatly improved. This is achieved by a two-wheeled vehicle frame according to claim 1. The dependent claims pertain to corresponding further developments and improvements.

As will be seen more clearly from the detailed description following below, the claimed two-wheeled vehicle frame is for an electronic bicycle. The electronic bicycle includes a power source and a battery. The power source is disposed on the two-wheeled vehicle frame for driving the electronic bicycle. The two-wheeled vehicle frame includes a battery container, a battery socket, a cover, and a first bending rod. The battery container has a containing space. The battery socket is fixed in the containing space and electrically connected to the power source. The battery is detachably inserted into the battery socket and contained in the containing space to provide electrical power to the power source. One end of the first bending rod is pivoted to the cover, and another end of the first bending rod is pivoted to the battery socket or the battery container. When the first bending rod pivots to enter the containing space, the cover pivots with the first bending rod to a covering position to cover an opening of the containing space. When the first bending rod pivots to leave the containing space, the cover pivots with the first bending rod to an opening position to expose the opening.

### Brief Description of the Drawings

In the following, the invention is further illustrated by way of example, taking reference to the accompanying drawings thereof:
FIG. 1 is a diagram of an electronic bicycle according to an embodiment of the present invention,
FIG. 2 is a partial exploded diagram of a two-wheeled vehicle frame in FIG. 1,
FIG. 3 is a cross-sectional diagram of the two-wheeled vehicle frame in FIG. 1 along a cross-sectional line A-A,
FIG. 4 is a cross-sectional diagram of a cover in FIG. 3 pivoting to make a cover edge interfere with a first bending rod,
FIG. 5 is a cross-sectional diagram of the cover in FIG. 4 pivoting to an opening position,
FIG. 6 is a diagram of the cover in FIG. 5 pivoting to the opening position,
FIG. 7 is a cross-sectional diagram of a two-wheeled vehicle frame according to another embodiment of the present invention,
FIG. 8 is a cross-sectional diagram of the cover in FIG. 7 pivoting to the opening position,
FIG. 9 is a diagram of a two-wheeled vehicle frame according to another embodiment of the present invention,
FIG. 10 is a cross-sectional diagram of the two-wheeled vehicle frame in FIG. 9 along a cross-sectional line B-B, and
FIG. 11 is a cross-sectional diagram of the cover in FIG. 10 pivoting to a covering position.

### Detailed Description

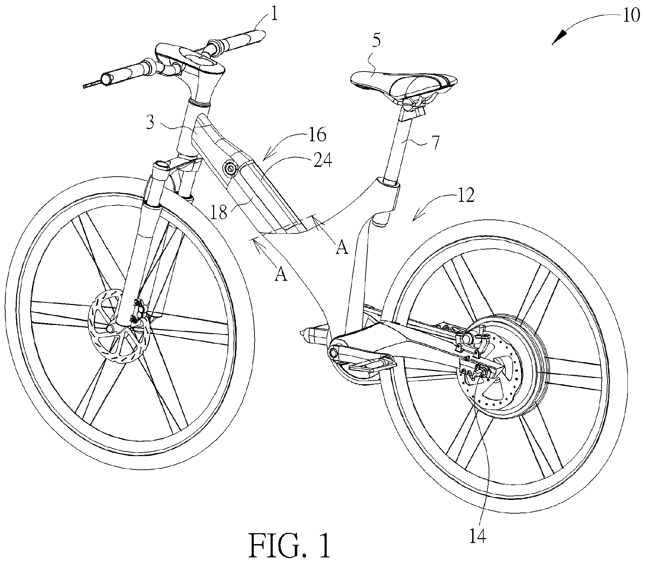

Please refer to FIG. 1, which is a diagram of an electronic bicycle 10 according to an embodiment of the present invention. As shown in FIG. 1, the electronic bicycle 10 includes a power source 14 (e.g. a motor, but not limited thereto), a two-wheeled vehicle frame 16, and a battery 22. In this embodiment, the present invention adopts the design that the two-wheeled vehicle frame 16 includes a main frame 12 composed of a lower tube 3 connected to a handle bar 1 and a seat tube 7 supporting a bicycle saddle 5, and the battery 22 is preferably disposed on the lower tube 3 of the main frame 12 (but not limited thereto). That is, the present invention is suitable for all the designs in which a tube structure of a two-wheeled vehicle frame of an electronic bicycle is utilized to contain a battery. The power source 14 is disposed on the main frame 12 for providing a driving force to rotate wheels of the electronic bicycle 10, so as to assist a user to ride the electronic bicycle 10 effortlessly. The main frame 12 has a battery container 18 and a battery socket 20, and the battery 22 is disposed in the battery container 18 for providing electrical power to the power source 14.

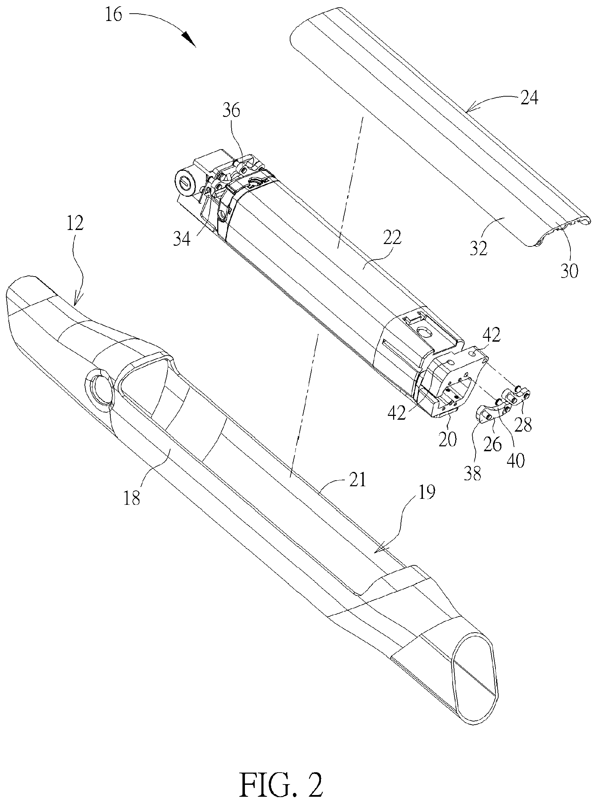

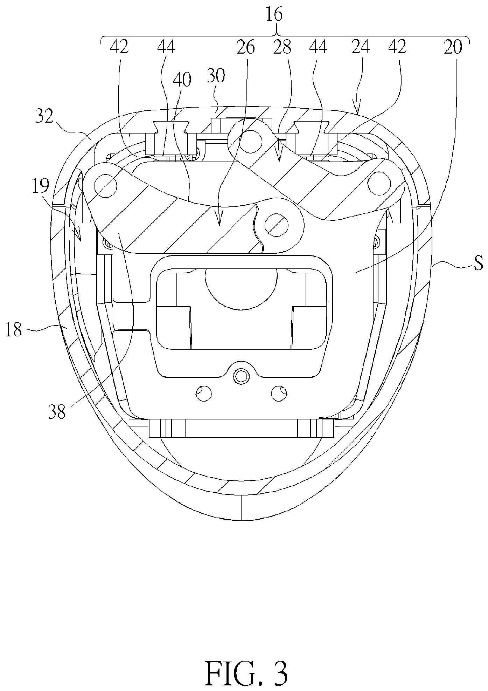

To be more specific, please refer to FIG. 2 and FIG. 3. FIG. 2 is a partial exploded diagram of the two-wheeled vehicle frame 16 in FIG. 1. FIG. 3 is a cross-sectional diagram of the two-wheeled vehicle frame 16 in FIG. 1 along a cross-sectional line A-A. As shown in FIG. 2 and FIG. 3, the battery container 18 has a containing space 19. The two-wheeled vehicle frame 16 further includes a cover 24, a first bending rod 26, and a second bending rod 28. The battery socket 20 is fixed in the containing space 19 and is electrically connected to the power source 14. The battery 22 is detachably inserted into the battery socket 20 and is contained in the containing space 19 for providing electrical power to the power source 14. One end of the first bending rod 26 is pivoted to the cover 24, and another end of the first bending rod 26 is pivoted to the battery socket 20 (but not limited thereto, meaning that the present invention could adopt the design that the first bending rod 26 is pivoted to the battery container 18 in another embodiment). The second bending rod 28 bends in the same direction relative to the first bending rod 26. One end of the second bending rod 28 is pivoted to the cover 24, and another end of the second bending rod 28 is pivoted to the battery socket 20 (but not limited thereto, meaning that the present invention could adopt the design that the second bending rod 28 is pivoted to the battery container 18 in another embodiment).

In this embodiment, the cover 24 could have a cover body 30 and a cover edge 32. The cover edge 32 extends outwardly from a side of the cover body 30. The first bending rod 26 is preferably pivoted to the cover edge 32, the second bending rod 28 is preferably pivoted to the cover body 30, and a length of the first bending rod 26 is preferably larger than a length of the second bending rod 28. Accordingly, the first bending rod 26 and the second bending rod 28 can form a linkage mechanism cooperatively with the cover 24 and the battery socket 20 such that the cover 24 can pivot relative to the battery container 18 together with pivoting of the first bending rod 26 and the second bending rod 28.

Furthermore, for making pivoting of the cover 24 relative to the battery container 18 steadier, the two-wheeled vehicle frame 16 could further include a third bending rod 34 and a fourth bending rod 36. The third bending rod 34 and the fourth bending rod 36 bend in the same direction relative to the first bending rod 26 and the second bending rod 28. The third bending rod 34 is preferably identical to the first bending rod 26, and the fourth bending rod 36 is preferably identical to the second bending rod 28. In this embodiment, as shown in FIG. 2, the first bending rod 26 and the second bending rod 28 are located at a side of the containing space 19, and the third bending rod 34 and the fourth bending rod 36 are located at another side of the containing space 19. Upper ends of the third bending rod 34 and the fourth bending rod 36 are pivoted to the cover edge 32 and the cover body 30 respectively, and lower ends of the third bending rod 34 and the fourth bending rod 36 are pivoted to the battery socket 20 respectively (but not limited thereto, meaning that the present invention could adopt the design that the third bending rod 34 and the fourth bending rod 36 are pivoted to the battery container 18 in another embodiment). Accordingly, the third bending rod 34 and the fourth bending rod 36 can form a linkage mechanism cooperatively with the cover 24 and the battery socket 20 to pivot together with the first bending rod 26 and the second bending rod 28 such that the cover 24 can pivot to a covering position or an opening position more steadily.

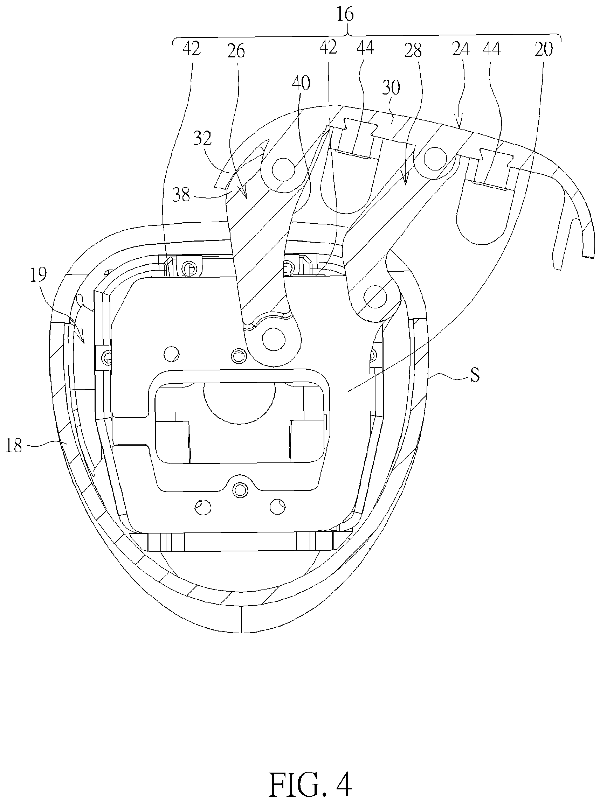

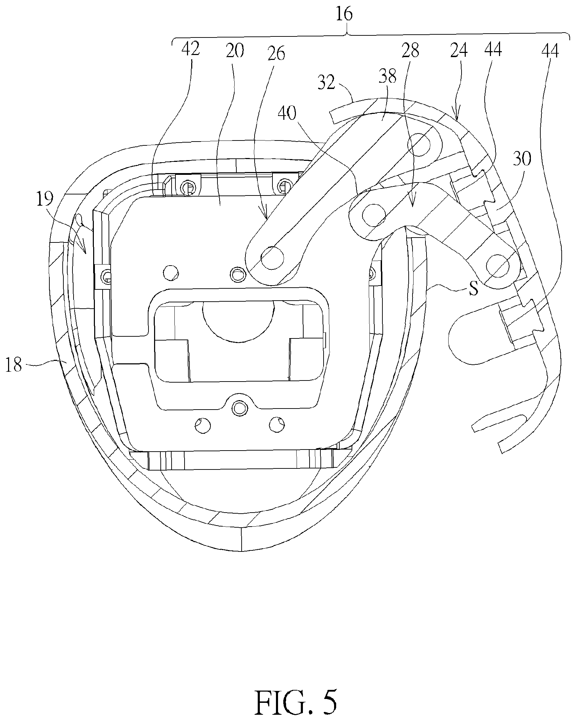

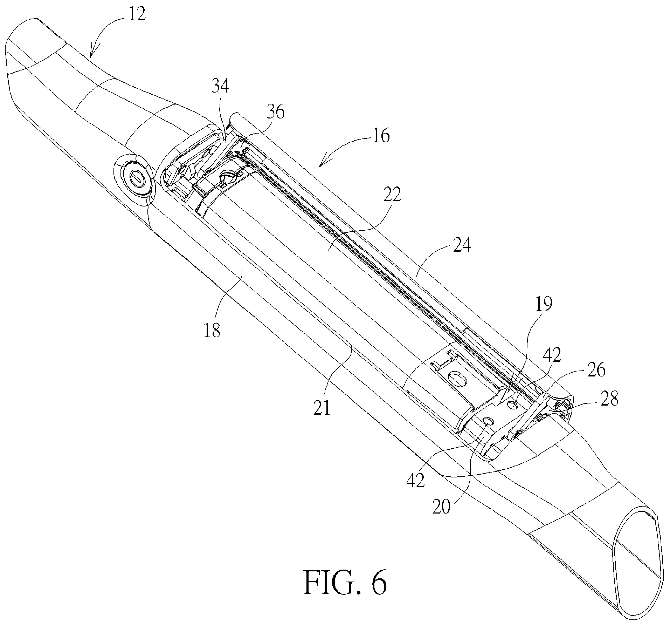

Moreover, please refer to FIG. 4, FIG. 5, and FIG. 6. FIG. 4 is a cross-sectional diagram of the cover 24 in FIG. 3 pivoting to make the cover edge 32 interfere with the first bending rod 26. FIG. 5 is a cross-sectional diagram of the cover 24 in FIG. 4 pivoting to the opening position. FIG. 6 is a diagram of the cover 24 in FIG. 5 pivoting to the opening position. As shown in FIGS. 4-6, a protruding edge 38 preferably protrudes from the first bending rod 26 corresponding to the cover edge 32, and an arc-shaped surface 40 is preferably formed on a position of the first bending rod 26 facing the second bending rod 28.

The two-wheeled vehicle frame 16 could further include at least one first magnetic member 42 (e.g. a magnet, two shown in FIG. 4, but not limited thereto) and a second magnetic member 44 corresponding to the first magnetic member 42. The first magnetic member 42 is disposed on the battery socket 20, and the second magnetic member 44 is disposed on the cover 24. When the cover 24 is located at the covering position, the second magnetic member 44 is correspondingly located above the first magnetic member 42, and a magnetic attraction force between the first magnetic member 42 and the second magnetic member 44 fixes the cover 24 at the covering position.

In such a manner, when the cover edge 32 abuts against but does not cross the protruding edge 38 with pivoting of the cover 24 toward the opening position (as shown in FIG. 4), the protruding edge 38 biases the cover edge 32 to cause deformation of the cover edge 32. Subsequently, when the cover edge 32 crosses the protruding edge 38 with pivoting of the cover 24 toward the opening position (as shown in FIG. 5), the cover edge 32 can provide an elastic force to accelerate pivoting of the first bending rod 26 since the cover edge 32 is no longer biased by the protruding edge 38, such that the user can open the cover 24 to the opening position as shown in FIG. 5 more smoothly. At this time, the arc-shaped surface 40 abuts against the second bending rod 28 to stop pivoting of the first bending rod 26 and the second bending rod 28, so as to prevent the first bending rod 26 and the second bending rod 28 from being over-rotated to collide with the battery container 18 and then cause damage of the two-wheeled vehicle frame 16. On the other hand, during the process of the cover 24 pivoting from the opening position as shown in FIG. 5 to the covering position as shown in FIG. 3, the second magnetic member 44 on the cover 24 approaches the first magnetic member 42 on the battery socket 20 with pivoting of the cover 24 to increase the magnetic attraction force between the first magnetic member 42 and the second magnetic member 44, so as to accelerate the cover 24 back to the covering position as shown in FIG. 3. Accordingly, the user can close the cover 24 more smoothly and effortlessly.

Via the aforesaid designs, when the user wants to open the cover 24, the user just needs to push the cover 24 as shown in FIG. 3 laterally, to pivot the first bending rod 26 and the second bending rod 28 to leave the containing space 19 (clockwise as shown in FIG. 3). At the same time, the third bending rod 34 and the fourth bending rod 36 pivot in the same direction together with the first bending rod 26 and the second bending rod 28. During this process, the cover 24 pivots from the covering position as shown in FIG. 3 to the opening position as shown in FIG. 5 with pivoting of the first bending rod 26 and the second bending rod 28, to be at least partially overlapped with a side wall S of the battery container 18, such that the opening 21 of the containing space 19 can be exposed as shown in FIG. 6. Accordingly, since the cover 24 has pivoted to a position corresponding to the side wall S of the battery container 18 to ensure that the battery replacement operation is not interfered by the cover 24, the user can detach the battery 22 from the battery socket 20 and then take the battery 22 out of the battery container 18 quickly and conveniently for subsequent battery replacement, maintenance or recharge.

On the other hand, when the user wants to close the cover 24, the user just needs to push the cover 24 as shown in FIG. 6 laterally, to pivot the first bending rod 26 and the second bending rod 28 to enter the containing space 19 (counterclockwise as shown in FIG. 5). At the same time, the third bending rod 34 and the fourth bending rod 36 pivot in the same direction relative to the first bending rod 26 and the second bending rod 28. During this process, the cover 24 pivots from the opening position as shown in FIG. 5 back to the covering position as shown in FIG. 3 with pivoting of the first bending rod 26 and the second bending rod 28, to cover the opening 21 of the containing space 19 for generating the protection and containing effect.

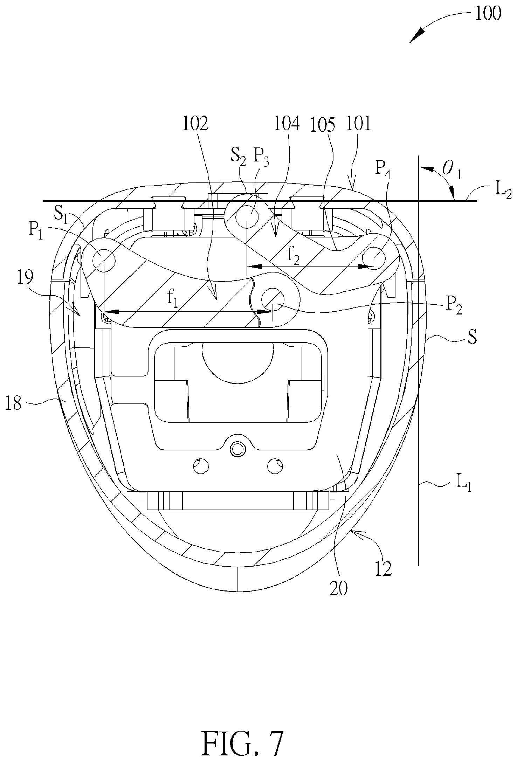

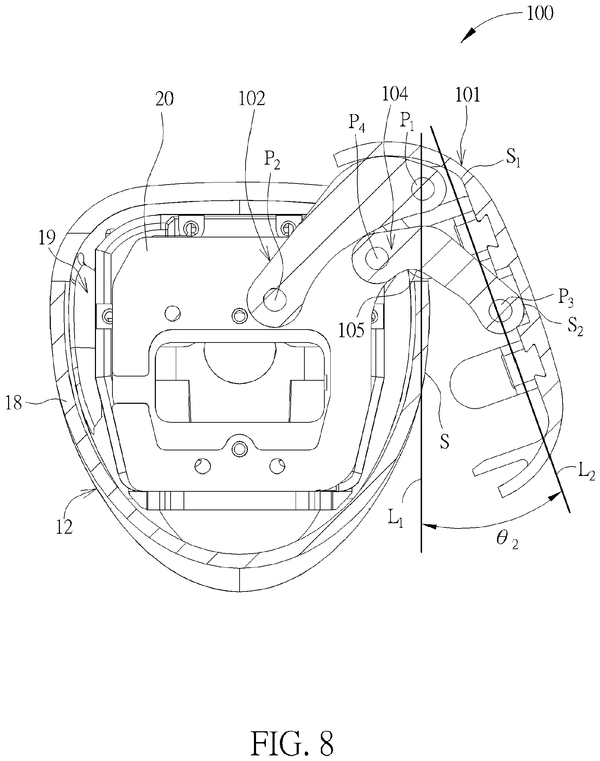

Furthermore, please refer to FIG. 7 and FIG. 8. FIG. 7 is a cross-sectional diagram of a two-wheeled vehicle frame 100 according to another embodiment of the present invention. FIG. 8 is a cross-sectional diagram of the cover 24 in FIG. 7 pivoting to the opening position. Components both mentioned in this embodiment and the aforesaid embodiment represent components with similar structures or functions, and the related description is omitted herein. The power source 14 and the battery 22 (not shown in FIGS. 7-8) could be disposed on the two-wheeled vehicle frame 100. The power source 14 provides a driving force, and the battery 22 provides electrical power to the power source 14. As shown in FIG. 7 and FIG. 8, the two-wheel vehicle frame 100 includes the main frame 12, a cover body 101, a first bending rod 102, and a second bending rod 104. The main frame 12 has the battery container 18 and the battery socket 20. The battery container 18 has the containing space 19 and the side wall S. The side wall S has a long axis L₁, and the cover body 101 has a long axis L₂. The battery 22 could be contained in the containing space 19. A first end P₁ of the first bending rod 102 is pivoted to the cover body 101, and a second end P₂ of the first bending rod 102 is pivoted to the main frame 12. A distance between the first end P₁ of the first bending rod 102 and the second end P₂ of the first bending rod 102 is defined as a first length f₁. A first end P₃ of the second bending rod 104 is pivoted to the cover body 101, and a second end P₄ of the second bending rod 104 is pivoted to the main frame 12. A distance between the first end P₃ of the second bending rod 104 and the second end P₄ of the second bending rod 104 is defined as a second length f₂. The first length f₁ is different from the second length f₂. To be more specific, in this embodiment, a distance between the second end P₄ of the second bending rod 104 and the side wall S is less than a distance between the second end P₂ of the first bending rod 102 and the side wall S, the second length f₂ is less than the first length f₁, and a curve 105 is formed on a middle section of the second bending rod 104. Furthermore, the first end P₁ of the first bending rod 102 is pivoted to a first side S₁ of the cover body 101, and the first end P₃ of the second bending rod 104 is pivoted to a second side S₂ of the cover body 101.

Via the aforesaid designs, when the first bending rod 102 and the second bending rod 104 pivot to leave the side wall S (i.e. the first bending rod 102 and the second bending rod 104 pivot counterclockwise to enter the containing space 19) such that the cover body 101 can pivot to a covering position as shown in FIG. 7, the cover body 101 covers the containing space 19, and the long axis L₂ of the cover body 101 extends in an approximately horizontal direction as shown in FIG. 7. At this time, a first angle *θ*₁ is included between the long axis L₂ of the cover body 101 and the long axis L₁ of the side wall S. On the other hand, when the first bending rod 102 and the second bending rod 104 pivot to approach the side wall S (i.e. the first bending rod 102 and the second bending rod 104 pivot clockwise to leave the containing space 19) such that the cover body 101 can pivot to an opening position as shown in FIG. 8, at least one portion of the containing space 19 is not covered by the cover body 101, the curve 105 of the second bending rod 104 is located above the side wall S (as shown in FIG. 7 and FIG. 8, a height difference between the first side S₁ and second side S₂ of the cover body 101 when the cover body 101 is located at the covering position is less than a height difference between the first side S₁ and second side S₂ of the cover body 101 when the cover body 101 is located at the opening position), and the long axis L₂ of the cover body 101 extends in an approximately vertical direction as shown in FIG. 8. At this time, a second angle *θ*₂ is included between the long axis L₂ of the cover body 101 and the long axis L₁ of the side wall S, and the second angle *θ*₂ is less than the first angle *θ*₁ to ensure that the battery replacement operation is not interfered by the cover body 101. Furthermore, since the protruding portion of the cover body 101 relative to the main frame 12 in a direction vertical to the long axis L₁ is accordingly reduced, the present invention can efficiently prevent the cover body 101 from colliding with other object accidentally. In such a manner, the user can detach the battery 22 from the battery socket 20 and then take the battery 22 out of the battery container 18 quickly and conveniently for subsequent battery replacement, maintenance or recharge.

To be noted, the present invention is not limited to contain the battery. For example, in another embodiment, the present invention can be suitable for a two-wheeled vehicle frame having a containing function. In brief, the present invention could provide a two-wheeled vehicle frame. The two-wheel vehicle frame could include the main frame, the cover body, the first bending rod, and the second bending rod. The main frame has the containing space and the side wall. The first end of the first bending rod is pivoted to the cover body, and the second end of the first bending rod is pivoted to the main frame. The distance between the first end of the first bending rod and the second end of the first bending rod is defined as the first length. The first end of the second bending rod is pivoted to the cover body, and the second end of the second bending rod is pivoted to the main frame. The distance between the first end of the second bending rod and the second end of the second bending rod is defined as the second length. The first length is different from the second length.

Via the aforesaid designs, when the first bending rod and the second bending rod pivot to leave the side wall (i.e. the first bending rod and the second bending rod pivot to enter the containing space) such that the cover body can pivot to the covering position, the cover body covers the containing space, and the first angle is included between the long axis of the cover body and the long axis of the side wall. On the other hand, when the first bending rod and the second bending rod pivot to approach the side wall (i.e. the first bending rod and the second bending rod pivot to leave the containing space) such that the cover body can pivot to the opening position. At this time, at least one portion of the containing space is not covered by the cover body, the second bending rod is located above the side wall, the second angle is included between the long axis of the cover body and the long axis of the side wall, and the second angle is less than the first angle to ensure that the user action (e.g. taking an object out of the containing space or put an object into the containing space) is not interfered by the cover body. Furthermore, the protruding portion of the cover body relative to the main frame in the direction vertical to the long axis of the side wall is accordingly reduced to efficiently prevent the cover body from colliding with other object accidentally. As for the detailed description of this embodiment, it could be reasoned by analogy according to the aforesaid embodiments and omitted herein.

In summary, the present invention adopts the aforesaid linkage mechanism to ensure that the cover can pivot together with the aforesaid bending rods. In such a manner, the user can open or close the cover quickly and conveniently to efficiently solve the prior art problem that the cover is not easy to open and the user action to take the battery out of the main frame is easily interfered by the cover when the cover is open, so that operational convenience of the electronic bicycle in disassembly and assembly of the battery can be greatly improved. Furthermore, the present invention could be applied to a two-wheeled vehicle frame having a containing function to help the user open or close the cover body on the two-wheeled vehicle frame smoothly for use of the containing space, so as to enhance functionality and operational convenience of the two-wheeled vehicle frame.

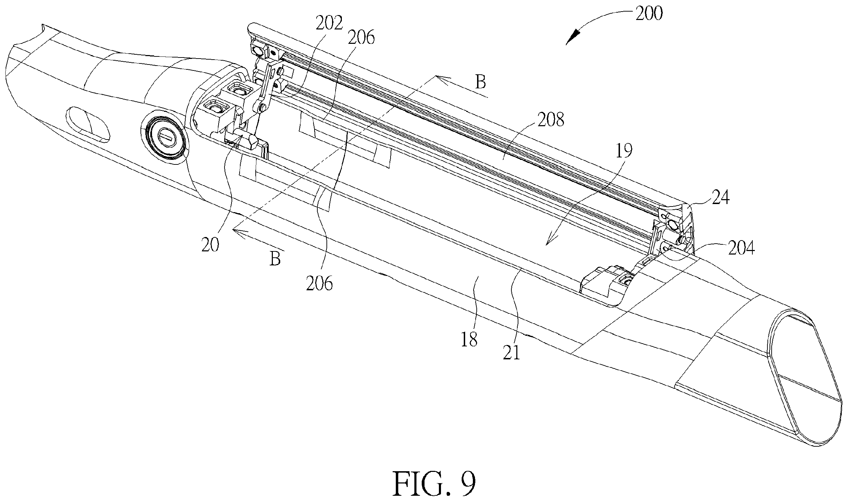

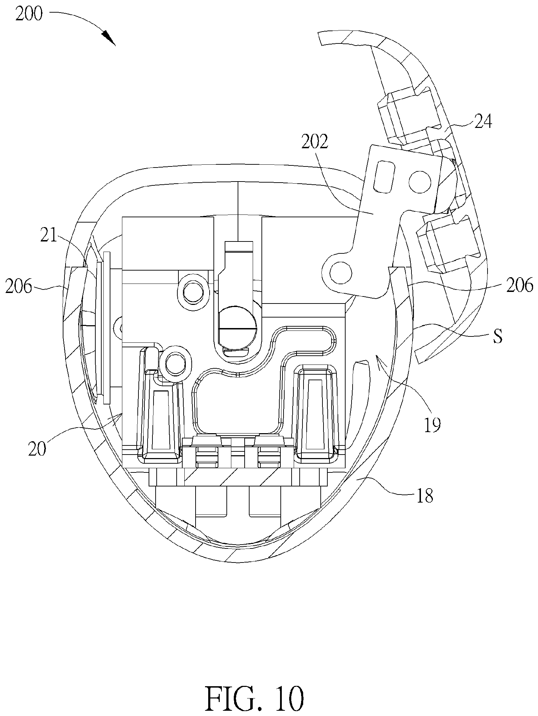

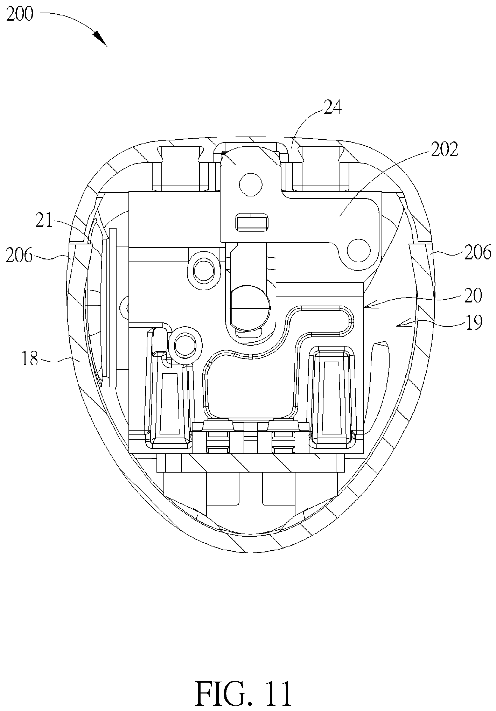

Furthermore, the rod design is not limited to the aforesaid embodiments. For example, please refer to FIG. 9, FIG. 10, and FIG. 11. FIG. 9 is a diagram of a two-wheeled vehicle frame 200 according to another embodiment of the present invention. FIG. 10 is a cross-sectional diagram of the two-wheeled vehicle frame 200 in FIG. 9 along a cross-sectional line B-B. FIG. 11 is a cross-sectional diagram of the cover 24 in FIG. 10 pivoting to a covering position. Components both mentioned in this embodiment and the aforesaid embodiments represent components with similar structures or functions, and the related description is omitted herein. The two-wheeled vehicle frame 200 is suitable for the electronic bicycle 10. The power source 14 and the battery 22 (not shown in FIGS. 9-11) could be disposed on the two-wheeled vehicle frame 200. The power source 14 provides a driving force, and the battery 22 provides electrical power to the power source 14. The two-wheeled vehicle frame 200 includes the battery container 18, the battery socket 20, the cover 24, a first bending rod 202, and a second bending rod 204. One end of the first bending rod 202 is pivoted to the cover 24, and another end of the first bending rod 202 is pivoted to the battery socket 20 (but not limited thereto, meaning that the present invention could adopt the design that the first bending rod 202 is pivoted to the battery container 18 in another embodiment). The second bending rod 204 bends in the same direction relative to the first bending rod 202. The first bending rod 202 is located at a side of the containing space 19, and the second bending rod 204 is located at another side of the containing space 19 and is pivoted to the cover 24 and the battery socket 20 (but not limited thereto, meaning that the present invention could adopt the design that the second bending rod 204 is pivoted to the battery container 18 in another embodiment). Accordingly, the first bending rod 202 and the second bending rod 204 can form a linkage mechanism cooperatively with the cover 24 and the battery socket 20 such that the cover 24 can pivot relative to the battery container 18 together with pivoting of the first bending rod 202 and the second bending rod 204.

To be noted, the second bending rod 204 could be an omissible component. That is, in another embodiment, the two-wheeled vehicle frame 200 could only adopt the design that one single rod (e.g. the first bending rod 202) is pivoted to the cover 24 and the battery socket 20 (or the battery container 18) for further simplifying the structural design of the two-wheeled vehicle frame 200, and the related description is omitted herein since it could be reasoned by analogy according to the following description.

Via the aforesaid designs, when the user wants to open the cover 24, the user just needs to push the cover 24 as shown in FIG. 11 laterally, to pivot (clockwise as shown in FIG. 11) the first bending rod 202 to leave the containing space 19. At the same time, the second bending rod 204 pivots in the same direction together with the first bending rod 202. During this process, the cover 24 pivots from the covering position as shown in FIG. 11 to the opening position as shown in FIG. 10 with pivoting of the first bending rod 202 and the second bending rod 204, to be at least partially overlapped with the side wall S of the battery container 18, such that the opening 21 of the containing space 19 can be exposed as shown in FIG. 10. Accordingly, since the cover 24 has pivoted to a position corresponding to the side wall S of the battery container 18 to ensure that the battery replacement operation is not interfered by the cover 24, the user can detach the battery 22 from the battery socket 20 and then take the battery 22 out of the battery container 18 quickly and conveniently for subsequent battery replacement, maintenance or recharge.

On the other hand, when the user wants to close the cover 24, the user just needs to push the cover 24 as shown in FIG. 10 laterally, to pivot (counterclockwise as shown in FIG. 10) the first bending rod 202 to enter the containing space 19. At the same time, the second bending rod 204 pivots in the same direction together with the first bending rod 202. During this process, the cover 24 pivots from the opening position as shown in FIG. 10 back to the covering position as shown in FIG. 11 with pivoting of the first bending rod 202 and the second bending rod 204, to cover the opening 21 of the containing space 19 for generating the protection and containing effect. As for the other designs (e.g. the magnetic attraction design and the structural interference design) of the two-wheeled vehicle frame 200, the related description could be reasoned by analogy according to the aforesaid embodiments and omitted herein.

In practical application, at least one groove 206 (two shown in FIG. 9, but not limited thereto) is recessed inwardly from a position of the battery container 18 corresponding to the opening 21 and close to the first bending rod 202 toward the containing space 19. Via the recessed design of the groove 206, the user can open the cover 24 more conveniently for the subsequent operation of laterally pushing the cover 24. Furthermore, as shown in FIG. 9, the two-wheeled vehicle frame 200 could further include a bridge sheet 208. The bridge sheet 208 is disposed on the cover 24 and is connected to the first bending rod 202 and the second bending rod 204 respectively, to ensure that the first bending rod 202 and the second bending rod 204 could pivot simultaneously. Accordingly, structural linkage between the first bending rod 202 and the second bending rod 204 can be improved such that the cover 24 can pivot to the opening position or the covering position more steadily.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A two-wheeled vehicle frame (16, 100, 200) for an electronic bicycle (10), the electronic bicycle (10) comprising a power source (14) and a battery (22), the power source (14) being disposed on the two-wheeled vehicle frame (16, 100, 200) for driving the electronic bicycle (10), the two-wheeled vehicle frame (16, 100, 200) **characterized by**:
a battery container (18) having a containing space (19);
a battery socket (20) fixed in the containing space (19) and electrically connected to the power source (14), the battery (22) being detachably inserted into the battery socket (20) and contained in the containing space (19) to provide electrical power to the power source (14);
a cover (24); and
a first bending rod (26, 102, 202), one end of the first bending rod (26, 102, 202) being pivoted to the cover (24), another end of the first bending rod (26, 102, 202) being pivoted to the battery socket (20) or the battery container (18);
wherein when the first bending rod (26, 102, 202) pivots to enter the containing space (19), the cover (24) pivots with the first bending rod (26, 102, 202) to a covering position to cover an opening (21) of the containing space (19);
when the first bending rod (26, 102, 202) pivots to leave the containing space (19), the cover (24) pivots with the first bending rod (26, 102, 202) to an opening position to expose the opening (21).

2. The two-wheeled vehicle frame (100) of claim 1, **characterized in that** the cover (24) is at least partially overlapped with a side wall of the battery container (18) when the cover (24) pivots to the opening position.

3. The two-wheeled vehicle frame (16, 100) of claim 1, **characterized in that** the two-wheeled vehicle frame (16, 100) further comprises a second bending rod (28, 104) bending toward a same direction relative to the first bending rod (26, 102), one end of the second bending rod (28, 104) is pivoted to the cover (24), and another end of the second bending rod (28, 104) is pivoted to the battery socket (20) or the battery container (18).

4. The two-wheeled vehicle frame (16) of claim 3, **characterized in that** the cover (24) has a cover body (30) and a cover edge (32), the cover edge (32) extends outwardly from a side of the cover body (30), the first bending rod (26) is pivoted to the cover edge (32), and the second bending rod (28) is pivoted to the cover body (30).

5. The two-wheeled vehicle frame (16) of claim 4, **characterized in that** a protruding edge (38) protrudes from the first bending rod (26) corresponding to the cover edge (32), the protruding edge (38) biases the cover edge (32) to cause deformation of the cover edge (32) when the cover edge (32) abuts against but does not cross the protruding edge (38) with pivoting of the cover (24) to the opening position, and the protruding edge (38) does not interfere with the cover edge (32) to make the cover edge (32) provide an elastic force to accelerate pivoting of the first bending rod (26) when the cover edge (32) crosses the protruding edge (38) with pivoting of the cover (24) to the opening position.

6. The two-wheeled vehicle frame (16, 100) of claim 3, **characterized in that** a length of the first bending rod (26, 102) is larger than a length of the second bending rod (28, 104).

7. The two-wheeled vehicle frame (16) of claim 3, **characterized in that** an arc-shaped surface (40) is formed on a position of the first bending rod (26) facing the second bending rod (28), and the arc-shaped surface (40) abuts against the second bending rod (28) to stop pivoting of the first bending rod (26) and the second bending rod (28) when the cover (24) pivots to the opening position.

8. The two-wheeled vehicle frame (16) of claim 3, **characterized in that** the two-wheeled vehicle frame (16) further comprises a third bending rod (34) and a fourth bending rod (36), the third bending rod (34) and the fourth bending rod (36) bend toward the same direction relative to the first bending rod (26), the first bending rod (26) and the second bending rod (28) are located at a side of the containing space (19) and are pivoted to the cover (24) respectively, the third bending rod (34) and the fourth bending rod (36) are located at another side of the containing space (19), the third bending rod (34) and the fourth bending rod (36) are pivoted to the cover (24) respectively and pivoted to the battery socket (20) respectively, and the third bending rod (34) and the fourth bending rod (36) pivot together with the first bending rod (26) and the second bending rod (28) to make the cover (24) pivot to the covering position or the opening position.

9. The two-wheeled vehicle frame (16) of claim 8, **characterized in that** the first bending rod (26) is identical to the third bending rod (34), and the second bending rod (28) is identical to the fourth bending rod (36).

10. The two-wheeled vehicle frame (16, 100, 200) of claim 1, **characterized in that** the two-wheeled vehicle frame (16, 100, 200) further comprises at least one first magnetic member (42) and at least one second magnetic member (44), the at least one first magnetic member (42) is disposed on the battery socket (20), the at least one second magnetic member (44) is disposed on the cover (24) corresponding to the at least one first magnetic member (42), and a magnetic attraction force between the at least one second magnetic member (44) and the at least one first magnetic member (42) accelerates the cover (24) back to the covering position when the first bending rod (26, 102, 202) pivots to enter the containing space (19).

11. The two-wheeled vehicle frame (200) of claim 1, **characterized in that** the two-wheeled vehicle frame (200) further comprises a second bending rod (204), the second bending rod (204) bends toward a same direction relative to the first bending rod (202), the first bending rod (202) is located at a side of the containing space (19), the second bending rod (204) is located at another side of the containing space (19) and is pivoted to the cover (24) and the battery socket (20), and the second bending rod (204) pivots together with the first bending rod (202) to make the cover (24) pivot to the covering position or the opening position.

12. The two-wheeled vehicle frame (200) of claim 1, **characterized in that** a groove (206) is recessed inwardly from a position of the battery container (18) corresponding to the opening (21) and close to the first bending rod (202) toward the containing space (19).

13. The two-wheeled vehicle frame (200) of claim 11, **characterized in that** the two-wheeled vehicle frame (200) further comprises a bridge sheet (208), and the bridge sheet (208) is disposed on the cover (24) and is connected to the first bending rod (202) and the second bending rod (204) respectively.
